Europäisches Patentamt

European Patent Office

Office européen des brevets

(11) Veröffentlichungsnummer: **0 271 894**
**A2**

(12) **EUROPÄISCHE PATENTANMELDUNG**

(21) Anmeldenummer: 87118644.1

(22) Anmeldetag: 16.12.87

(51) Int. Cl.⁴: **F16F 13/00**

(30) Priorität: 19.12.86 DE 3643556

(43) Veröffentlichungstag der Anmeldung:
22.06.88 Patentblatt 88/25

(84) Benannte Vertragsstaaten:
DE ES FR GB IT SE

(71) Anmelder: METZELER Gesellschaft mit
beschränkter Haftung
Gneisenaustrasse 15
D-8000 München 50(DE)

(72) Erfinder: Behrens, Stefan
Hollersborn 38
D-5410 Höhr-Grenzhausen(DE)
Erfinder: Hofmann, Manfred
Gerhard v. Diets-Strasse 15
D-6257 Hünfelden(DE)

(74) Vertreter: Michelis, Theodor, Dipl.-Ing.
Gneisenaustrasse 15
D-8000 München 50(DE)

(54) Hydraulisch dämpfendes Motorlager.

(57) Bei einem hydraulisch dämpfenden Motorlager
mit einer Arbeitskammer, die eine kegelmantelförmige, gummielastische Wandung mit einer
metallischen Lagerplatte an der Kegelspitze aufweist,
ist zur Absenkung der dynamischen Steifigkeit auch
im höherfrequenten Bereich erfindungsgemäß vorgesehen, daß in der Arbeitskammer (5) parallel zur zwischenplatte (6) eine starre, kreisscheibenförmige
Platte (12) geringeren Durchmessers als dem der
Arbeitskammer (5) angeordnet ist, und daß diese
Platte (12) starr mit der Lagerplatte (2) verbunden
ist.

FIG.1

## Hydraulisch dämpfendes Motorlager

Die Erfindung bezieht sich auf ein hydraulisch dämpfendes Motorlager mit einer Arbeitskammer, die eine kegelmantelförmige, gummielastische Wandung mit einer metallischen Lagerplatte an der Spitze aufweist und die über eine Überströmöffnung in einer die andere Stirnseite der Arbeitskammer begrenzenden starren Zwischenplatte mit einer Ausgleichskammer in Verbindung steht.

Ein derartiges Motorlager ist beispielsweise aus der DE-OS 32 44 296 bekannt. Wesentlich für ein solches Lager ist einmal die Dämpfung großer Amplituden niedriger Frequenz, die im allgemeinen durch Größe und Anordnung der Überstömöffnung bestimmt wird, sowie der Verlauf der dynamischen Steifigkeit, um eine möglichst gute Isolierung akustischer Schwingungen zu erreichen. Für den Verlauf der dynamischen Steifigkeit ist dabei einmal die Geometrie des Lagers verantwortlich und zum anderen innerhalb des Arbeitsraumes angeordnete Entkopplungsmembranen, mit denen hochfrequente Schwingungen kleiner Amplitude entkoppelt werden können. Damit wird im allgemeinen eine Absenkung der dynamischen Steifigkeit über ein gewisses Frequenzband erreicht. Ab bestimmten Frequenzen ist mit einer derartigen Entkopplungsmembran eine weitere Absenkung oder Niedrighalten der dynamischen Steifigkeit jedoch nicht mehr zu erreichen, sondern diese steigt dann steil an.

Der Erfindung liegt daher die Aufgabe zugrunde, eine Anordnung zu schaffen, mit der die dynamische Steifigkeit über einen weiteren Frequenzbereich abgesenkt und niedrig gehalten werden kann.

Zur Lösung dieser Aufgabe ist erfindungsgemäß vorgesehen, daß in der Arbeitskammer parallel zur Zwischenplatte eine starre, kreisscheibenförmige Platte geringeren Durchmessers als den der Arbeitskammer angeordnet ist und daß diese Platte starr mit der Lagerplatte verbunden ist.

Durch diese Anordnung einer synchron mit der Lagerplatte schwingenden zweiten Platte innerhalb des Arbeitsraumes wird zwischen den Außenumfang dieser Platte und der Innenwandung der Wandung der Arbeitskammer ein ringförmiger, zusätzlicher Überströmkanal einstellbarer Größe gebildet, mit dem das dynamische Verhalten des Lagers beeinflußt und insbesondere die dynamische Steifigkeit über ein weiteres Frequenzband abgesenkt werden kann.

Zweckmäßigerweise ist die Platte über einen vertikalen Bolzen mit der Lagerplatte verbunden.

Bei einer hängenden Anordnung des Lagers und damit von einer starren Umfangswand aus in die Arbeitskammer stirnseitig von unten hineinragenden kegelmantelförmigen Wandung ist dabei die Platte zweckmäßigerweise unmittelbar auf der Lagerplatte befestigt.

Vorteilhaft ist es, wenn der Durchmesser der Platte mindestens die Hälfte des Durchmessers der Arbeitskammer und ihre Dicke etwa 1 100 bis 1 5 ihres Durchmessers beträgt. Damit kann die Größe des zusätzlich gebildeten Überströmkanals zweckmäßig entsprechend den jeweiligen Anforderungen eingestellt werden.

Anhand einer schematischen Zeichnung sind Aufbau und Wirkungsweise von Ausführungsbeispielen nach der Erfindung näher erläutert. Dabei zeigen

Fig. 1 einen Längsschnitt durch ein Motorlager mit zusätzlicher umströmter Platte

Fig. 2 ein gleichwirkendes Motorlager in hängender Anordnung und

Fig. 3 ein Diagramm über den Verlauf der dynamischen Steifigkeit.

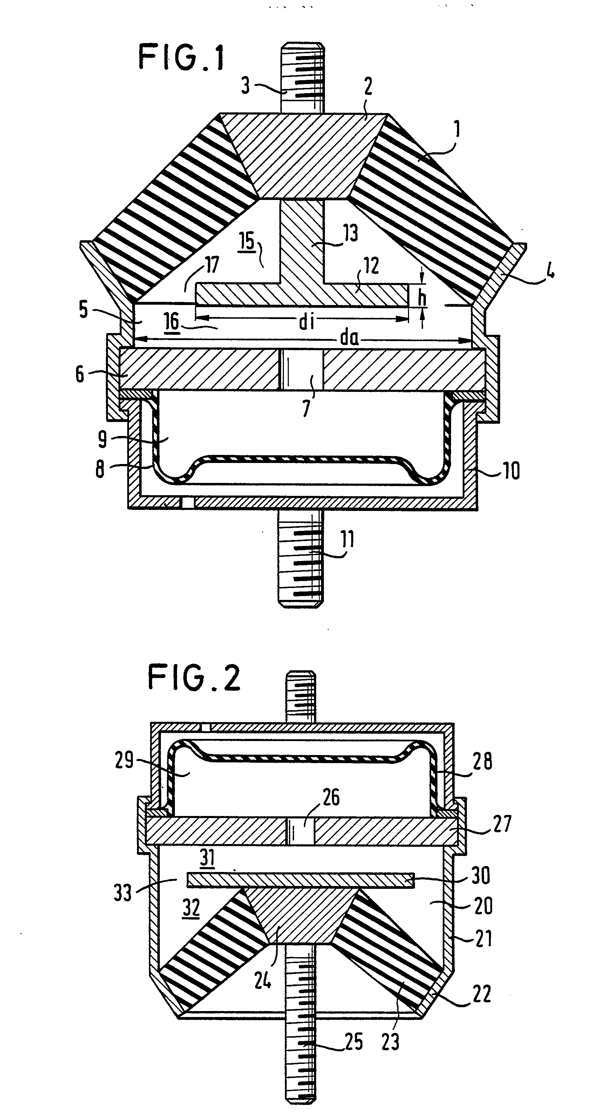

Wie man aus Fig. 1 ersieht, weist das hydraulisch dämpfende Motorlager in herkömmlicher Weise eine kegelmantelförmige Wandung 1 aus einem gummielastischen Material auf, die an ihrer Spitze von einer metallischen Lagerplatte 2 mit einem Bolzen 3 zur Befestigung des nicht näher dargestellten Motors abgeschlossen und an ihrer Basis an einen ringförmigen Metallflansch 4 anvulkanisiert ist. Die somit gebildete Arbeitskammer 5 wird an ihrer unteren Stirnseite von einer im Metallflansch 4 gehalterten Zwischenplatte 6 mit einer Überströmöffnung 7 abgeschlossen, an die auf der Unterseite die von einem flexiblem Balg 8 begrenzte Ausgleichskammer 9 anschließt. Über ein topfförmiges Befestigungsteil 10 kann dann das Lager über einen weiteren Bolzen 11 an der Karosserie oder einem entsprechenden Befestigungsteil festgeschraubt werden.

In der Arbeitskammer 5 ist nunmehr parallel zur Zwischenplatte 6 eine kreisscheibenförmige Platte 12 angeordnet, die über einen vertikalen Bolzen 13 starr mit der oberen Lagerplatte 2 verbunden ist. Durch diese Platte 12 wird nunmehr die Arbeitskammer 5 in zwei Teilkammern 15 und 16 unterteilt, die über einen zwischen dem Außenumfang der Platte 12 und der Innenwandung des Flansches 4 gebildeten ringförmigen Überströmkanal 17 miteinander in Verbindung stehen.

Bei einer Relativbewegung von Lagerplatte 2 und kreisscheibenförmiger Platte 12 gegenüber dem Befestigungsflansch 4 und der Zwischenplatte 6 verändern sich die beiden Teilkammern 15 und 16 in ihrem Volumen, so daß ein Flüssigkeitsaustausch - unabhängig von dem über die Überströmöffnung 7 - zwischen den Teilkammern 15 und 16 stattfindet.

Durch diese Flüssigkeitsbewegung werden im Lager zusätzliche Trägheits-und Dämpfungseffekte hervorgerufen, die das dynamische Verhalten des Lagers bei wechselnden Frequenzen festlegen.

Wesentlich für das dynamische Verhalten ist dabei die Geometrie des zusätzlichen ringförmigen Überströmkanals 17, der durch seine Breite und Höhe bestimmt wird. Dabei hat es sich als besonders vorteilhaft ergeben, wenn der Durchmesser $d_i$ der Platte 12 mindestens die Hälfte des Durchmessers $d_a$ der Arbeitskammer 5 beträgt, d.h. wenn
$$1 < d_a/d_i \leq 2$$
ist, und wenn die Dicke der Platte 1/100 bis 1/5 ihres Durchmessers beträgt und damit die Relation
$$5 < d_i/h \leq 100$$
erfüllt ist.

Zusätzlich kann mit entsprechender Auslegung und Dimensionierung der Überströmöffnung 7 in entsprechender Abstimmung auf die Geometrie des Überströmkanals 17 das dynamische Verhalten des Lagers auf die speziellen Anwendungsfälle abgestimmt werden.

In dem Ausführungsbeispiel nach Fig. 2 ist ein derartiges hydraulisch dämpfendes Motorlager in hängender Anordnung dargestellt. Dazu ist die Arbeitskammer 20 von dem zunächst zylindrisch ausgebildeten Befestigungsflansch 21 umgeben, auf dessen unterem, nach innen eingezogenen Ende 22 sich die Basis der kegelmantelförmigen Tragfeder 23 abstützt und damit in den Arbeitsraum 20 hineinragt. Die Kegelspitze dieser Tragfeder 23 ist dabei ebenfalls von der Motorlagerplatte 24 abgeschlossen, an der über einen Bolzen 25 der abzustützende Motor angehängt ist. Über eine Überströmöffnung 26 in der Zwischenplatte 27 steht die Arbeitskammer 20 mit der von einem flexiblen Balg 28 umschlossenen Ausgleichskammer 29 in Verbindung.

Bei einer derartigen Ausbildung des Motorlagers kann die kreisscheibenförmige Platte 30 unmittelbar auf der Lagerplatte 24 befestigt sein. Auch hiermit ergibt sich oberhalb und unterhalb der Platte 30 eine Teilkammer 31 und 32, die über eine ringförmige Überströmöffnung 33 am äußeren Umfang der Platte 30 miteinander in Verbindung stehen.

Die Wirkungsweise eines derart ausgebildeten Lagers ist die gleiche, wie die des in Fig. 1 beschriebenen.

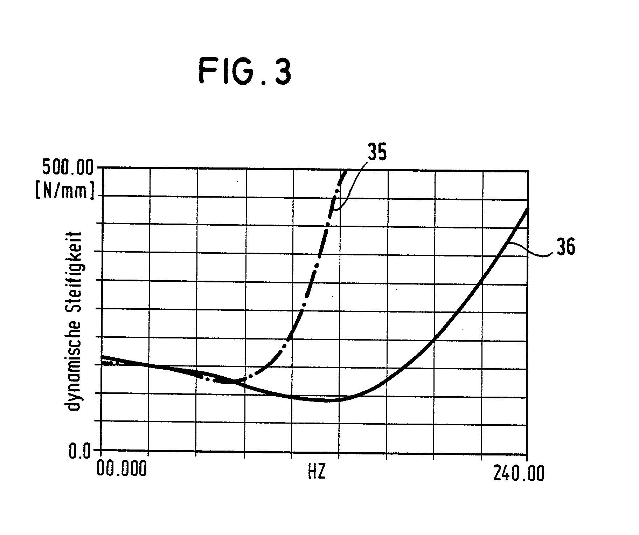

In dem Diagramm nach Fig. 3 ist schließlich der Verlauf der dynamischen Steifigkeit gezeigt. Dabei ist über der Frequenz in Hz die dynamische Steifigkeit in N/mm aufgetragen. Der Verlauf der dynamischen Steifigkeit eines herkömmlichen, hydraulisch dämpfenden Motorlagers, beispielsweise mit einer Entkopplungsmembran, ist durch die strichpunktierte Kurve 35 dargestellt, während der Verlauf der dynamischen Steifigkeit eines erfindungsgemäßen Lagers entsprechend der ausgezogenen Kurve 36 verläuft. Daraus ersieht man, daß durch die Schaffung des zweiten Überstömkanals und der entsprechenden Flüssigkeitsbewegungen innerhalb der Arbeitskammer der Anstieg der dynamischen Steifigkeit zu einer höheren Frequenz verschoben wird und daß gleichzeitig der Wert der dynamischen Steifigkeit bis zu einer höheren Frequenz weiter absinkt, so daß damit eine verbesserte akustische Entkopplung möglich ist.

Es ist dabei aber auch möglich, in herkömmlicher Weise gesonderte Entkopplungsmembranen z.B. in der Zwischenplatte anzuordnen.

## Ansprüche

1. Hydraulisch dämpfendes Motorlager mit einer Arbeitskammer, die eine kegelmantelförmige gummielastische Wandung mit einer metallischen Lagerplatte an der Kegelspitze aufweise und die über eine Überströmöffnung in einer die andere Stirnseite der Arbeitskammer begrenzenden starren Zwischenplatte mit einer Ausgleichskammer in Verbindung steht, dadurch gekennzeichnet, daß in der Arbeitskammer (5, 20) parallel zur Zwischenplatte (6, 27) eine starre, kreisscheibenförmige Platte (12, 30) geringeren Durchmessers als den der Arbeitskammer angeordnet ist, und daß diese Platte (12, 30) starr mit der Lagerplatte (2, 24) verbunden ist.

2. Hydraulisch dämpfendes Motorlager nach Anspruch 1, dadurch gekennzeichnet, daß die Platte (12) über einen vertikalen Bolzen (13) mit der Lagerplatte (2) verbunden ist.

3. Hydraulisch dämpfendes Motorlager nach Anspruch 1, dadurch gekennzeichnet, daß bei hängender Anordnung des Lagers die Arbeitskammer (20) von einer zylindrischen Umfangswand (21) aus Metall mit einer konischen Einziehung (22) am unteren Rand begrenzt ist, daß sich die kegelmantelförmige Tragfeder (23) auf dieser konischen Einziehung (22) abstützt und in die Arbeitskammer (20) hineinragt und an ihrer Spitze die direkt auf die das Zentrum der Tragfeder (23) bildenden Lagerplatte (24) aufgesetzte kreisscheibenförmige Platte (30) trägt, die mit der Umfangswand (21) einen Spalt (33) bildet, der unabhängig von der Höhe der Einfederung eine konstante Breite aufweist.

4. Hydraulisch dämpfendes Motorlager nach Anspruch 2 oder 3, dadurch gekennzeichnet, daß der Durchmesser der Platte (12, 30) mindestens die Hälfte des Durchmessers der Arbeitskammer (5, 20) beträgt.

5. Hydraulisch dämpfendes Motorlager nach Anspruch 4, dadurch gekennzeichnet, daß die Dicke der Platte (12, 30) 1 100 bis 1.5 ihres Durchmessers beträgt.

# FIG.1

# FIG.2

# FIG.3